Europäisches Patentamt

European Patent Office

Office européen des brevets

(19)

(11) **EP 0 742 144 B1**

# (12) FASCICULE DE BREVET EUROPEEN

(45) Date de publication et mention
de la délivrance du brevet:
**29.09.1999 Bulletin 1999/39**

(51) Int. Cl.⁶: **B64C 27/51**

(21) Numéro de dépôt: **96400989.8**

(22) Date de dépôt: **09.05.1996**

(54) **Rotor avec dispositif d'amortissement de trainée des pales**

Rotor mit einer Dämpfungsvorrichtung für die Schwenkbewegung der Rotorblätter

Rotor with a device for damping lead-lag motion of the rotor blades

(84) Etats contractants désignés:
**DE GB IT**

(30) Priorité: **12.05.1995 FR 9505663**

(43) Date de publication de la demande:
**13.11.1996 Bulletin 1996/46**

(73) Titulaire: **EUROCOPTER
F-13725 Marignane Cédex (FR)**

(72) Inventeur: **Certain, Nicolas
13090 Aix en Provence (FR)**

(74) Mandataire: **Bérogin, Francis
Cabinet Plasseraud
84, rue d'Amsterdam
75440 Paris Cedex 09 (FR)**

(56) Documents cités:
**EP-A- 0 340 095          US-A- 2 494 985**

- PROCEDINGS 14TH EUROPEAN ROTORCRAFT FORUM, 20 - 23 Septembre 1988, MILANO, ITALY, pages 45/1-14, XP002010567 GUIMBAL B.: "PAPER NO.45: DESIGN, EVALUATION AND PROOF-OF-CONCEPT FLIGHTS OF A MAIN ROTOR INTERBLADE VISCOELASTIC DAMPING SYSTEM"

## Description

L'invention concerne un rotor de giravion, en particulier un rotor principal ou un rotor arrière conventionnel d'hélicoptère, à au moins trois pales reliées chacune par un organe de liaison respectif à un moyeu de rotor, entraîné en rotation autour d'un axe du rotor, qui comporte un dispositif d'amortissement de traînée des pales.

Il est connu d'équiper les rotors de giravion, et en particulier les rotors d'hélicoptère, d'amortisseurs de trainée destinés à amortir les débattements angulaires des pales autour de leur axe de trainée, qui est sensiblement parallèle à l'axe de rotation du rotor.

De nombreuses réalisations différentes de tels amortisseurs sont connues, notamment des amortisseurs hydrauliques, hydropneumatiques, stratifiés à au moins une couche d'un matériau visco-élastique sollicité entre deux armatures rigides, ou comportant des combinaisons de ces différents moyens.

Ces amortisseurs comprennent souvent des moyens de rappel élastique à raideur et amortissement déterminés, pour combattre des phénomènes de résonance, en particulier de résonance sol et de résonance de chaîne cinématique, qui peuvent apparaître sur les hélicoptères.

Lors d'une excitation des pales d'un rotor en traînée, les pales sont écartées de leur position d'équilibre et peuvent se répartir inégalement en direction circonférentielle, et créer un balourd par déplacement du centre de gravité du rotor hors de l'axe de rotation de ce dernier. De plus, les pales écartées de leur position d'équilibre oscillent autour de cette position à une fréquence $\omega_\delta$, qui est la fréquence propre des pales en trainée, appelée également premier mode de traînée ou mode propre de trainée.

Si $\Omega$ est la fréquence de rotation du rotor, il est connu que le fuselage de l'hélicoptère est ainsi excité aux fréquences $|\Omega \pm \omega_\delta|$.

Posé sur le sol par son train d'atterrissage, le fuselage de l'hélicoptère constitue un système à masse suspendue au-dessus du sol par un ressort et un amortisseur au niveau de chaque atterrisseur. Le fuselage reposant sur son train d'atterrissage a donc des modes propres de vibration en roulis et en tangage. Il y a risque d'instabilité au sol lorsque la fréquence d'excitation du fuselage sur son train d'atterrissage est voisine de la fréquence propre d'oscillation $|\Omega + \omega_\delta|$ ou $|\Omega - \omega_\delta|$ ce qui correspond au phénomène dénommé résonance sol. Pour éviter l'instabilité, il est connu de rechercher d'abord à éviter le croisement de ces fréquences, et, si ce croisement ne peut être évité, il faut amortir suffisamment le fuselage sur son train d'atterrissage ainsi que les pales du rotor principal dans leur mouvement de trainée.

Pour un rotor arrière, le phénomène de résonance à éviter est le même, si ce n'est qu'il convient de considérer les modes propres d'oscillation de la poutre de queue et non les modes propres de vibration du fuselage en roulis et en tangage.

En conséquence, la raideur des amortisseurs de trainée des pales d'un rotor principal doit être choisie pour que la fréquence propre des pales en trainée soit hors d'une zone de résonance sol possible, tout en disposant simultanément d'un amortissement suffisant, car, lors du passage du régime de rotation du rotor au régime critique, lors de la montée comme lors de la descente en régime, les pales doivent être suffisamment amorties pour éviter une entrée en résonance.

Pour cette raison, les amortisseurs de trainée à moyens de rappel élastique de raideur déterminée sont également dénommés adaptateurs de fréquence.

Leur raideur, leur structure et leur implantation sur le rotor doivent être choisies non seulement pour combattre le phénomène de résonance sol, comme expliqué ci-dessus, mais également pour assurer un découplage vis-à-vis de la régulation du groupe moteur entraînant le rotor et combattre un autre phénomène de résonance dénommé résonance de chaîne cinématique. Dans ce cas, la fréquence du mode concerné est $\omega_\delta$.

L'implantation la plus classique d'un amortisseur de trainée est d'articuler une extrémité de ce dernier par une rotule sur un côté de la pale correspondante ou d'un organe de liaison de cette pale au moyeu, et d'articuler l'autre extrémité de l'amortisseur de traînée par une autre rotule sur un point fixe du moyeu, le plus souvent situé entre cette pale et une pale voisine. La raideur de l'amortisseur introduit une raideur angulaire équivalente, s'opposant aux débattements angulaires de la pale par rapport au moyeu autour de son axe de trainée. On peut ainsi augmenter la fréquence du mode propre des pales en trainée pour se découpler des deux phénomènes de résonance précités, et en particulier de la résonance de chaîne cinématique.

Toutefois, les inconvénients d'un tel montage sont de deux ordres :

- comme la raideur angulaire équivalente est proportionnelle au carré du bras de levier entre l'amortisseur et l'axe de trainée de la pale, c'est-à-dire la distance séparant l'axe de trainée de l'axe passant par les centres des deux rotules d'articulation de l'amortisseur, et que ce bras de levier est court dans une telle implantation, la raideur de l'amortisseur doit avoir une valeur importante pour assurer le découplage en fréquence nécessaire pour éviter la résonance sol. Il en résulte que l'amortisseur introduit un effort statique important ;
- il existe des configurations technologiques de moyeux qui ne permettent pas d'obtenir une raideur angulaire équivalente assez grande pour éviter de manière sûre la résonance sol.

Il est également connu de monter des amortisseurs de traînée en adaptateurs de fréquences interpales. Chaque amortisseur est articulé par une extrémité et à l'aide d'une rotule sur un côté d'une pale ou d'un organe de liaison de cette pale au moyeu, et par son autre extrémité, à l'aide d'une autre rotule, sur le côté en regard de la pale voisine ou de l'organe de liaison de cette pale voisine au moyeu.

Cette implantation permet d'augmenter les bras de levier entre les amortisseurs et les axes de traînée des pales, mais aussi de faire participer deux amortisseurs par pale pour éviter la résonance sol. La raideur de chaque amortisseur peut être limitée en conséquence, et un avantage qui en découle est le faible niveau d'effort statique introduit par le montage de chaque amortisseur en adaptateur interpale. Cette implantation est donc très favorable pour combattre la résonance sol.

Par contre, cette implantation présente des inconvénients qui sont :

-   l'absence totale de raideur et d'amortissement pour combattre la résonance de chaine cinématique, car les amortisseurs interpales ne sont pas sollicités par des déplacements en phase des pales en traînée, obtenus en mode de chaine cinématique ;
-   il est pratiquement impossible d'adopter cette implantation d'amortisseurs interpales sur un rotor tripale, du fait des interférences des amortisseurs avec les leviers de commande de pas des pales.

Aucun des montages classiques connus, et présentés ci-dessus, des adaptateurs de fréquence ou amortisseurs de traînée ne permet d'assurer à la fois de manière sûre la stabilité vis-à-vis de la résonance sol et vis-à-vis de la résonance de chaine cinématique.

Le problème à la base de l'invention est de proposer un rotor de giravion avec dispositif d'amortissement en traînée des pales qui permet de cumuler les avantages des deux implantations de l'état de la technique présentées ci-dessus, sans en avoir les inconvénients.

Un but de l'invention est de proposer un rotor avec un dispositif d'amortissement de traînée qui introduit deux raideurs permettant de résoudre les problèmes posés par la résonance sol et par la résonance de chaine cinématique, et facilitant le réglage de ces deux raideurs.

Un autre but de l'invention est de proposer un rotor tripale avec dispositif d'amortissement de traînée permettant de procurer au rotor les mêmes avantages qu'une implantation d'adaptateurs de fréquence interpales pour combattre la résonance sol et sans risque d'interférence avec les leviers de pas des pales.

A cet effet, l'invention propose un rotor avec un dispositif d'amortissement de traînée qui permet de remplir les fonctions des deux types de montage d'amortisseurs de traînée ou adaptateurs de fréquence de l'état de la technique, avec un réglage simple et indépendant des raideurs équivalentes concernant les deux modes de trainée, à savoir le mode coplanaire qui pose problème dans le phénomène de résonance sol, et le mode en phase qui pose problème dans le phénomène de résonance de chaine cinématique, le dispositif étant de plus parfaitement adaptable à un rotor tripale. A cet effet, le rotor de l'invention se caractérise en ce que le dispositif d'amortissement de trainée comprend, entre les deux pales de chaque paire de pales voisines du rotor,

-   un premier levier, articulé par une première rotule sur ledit organe de liaison d'une première des deux pales,
-   un second levier, articulé par une seconde rotule sur ledit organe de liaison de la seconde des deux pales, et
-   un troisième levier, articulé par une troisième rotule sur le moyeu, entre lesdits organes de liaison des deux pales, et s'étendant entre lesdits organes de liaison et latéralement vers l'extérieur du moyeu, les premier et second leviers étant articulés sur le troisième levier par une première et une seconde liaisons pivotantes respectivement, autour d'axes de pivot parallèles l'un à l'autre et sensiblement perpendiculaires au plan défini par les centres des trois rotules, et l'un au moins des trois leviers comprenant au moins un amortisseur de trainée desdites deux pales.

Lors des mouvements relatifs des pales et du moyeu, les axes de pivot de ce dispositif permettent de conserver les trois leviers sensiblement coplanaires dans le plan défini par les centres des trois rotules, d'où l'avantage d'un dispositif mécaniquement isostatique.

En outre, pour une raideur donnée de chaque amortisseur de trainée, le choix, d'une part, des bras de levier ou distances entre chacun des premier et second leviers et l'axe de trainée respectivement de la première et de la seconde des deux pales considérées, et, d'autre part, des bras de levier ou distances entre chacun des premier et second leviers et le centre de la troisième rotule, permet de régler de manière simple et indépendante les raideurs angulaires équivalentes d'une pale par rapport au moyeu et d'une pale par rapport à une autre paie pour lutter respectivement contre la résonance de chaine cinématique et contre la résonance sol.

Avantageusement, pour limiter l'encombrement du dispositif et améliorer son fonctionnement, la première et la seconde rotules sont retenues sur le côté, tourné vers le troisième levier, de l'organe de liaison respectif, ledit troisième levier s'étendant sensiblement radialement par rapport à l'axe de rotation du rotor, auquel les deux axes de pivot sont sensiblement parallèles.

Les deux liaisons pivotantes peuvent être coaxiales, c'est-à-dire que les deux axes géométriques de pivot peuvent être confondus, de sorte que les premier et second leviers assurent une liaison interpale, qui peut être adoptée sur un rotor tripale. Dans ce cas, la raideur d'une pale par rapport au moyeu est pratiquement nulle.

Mais le réglage des deux raideurs angulaires équivalentes mentionnées ci-dessus peut conduire à ce que les deux axes de pivot sont décalés radialement l'un par rapport à l'autre et par rapport à l'axe de rotation du rotor.

Selon différentes variantes possibles, le troisième levier peut comprendre un amortisseur de trainée, et/ou l'un au moins des premier et second leviers peut comprendre un amortisseur de trainée, lequel est avantageusement, dans ce cas, sensiblement rectiligne. Selon une autre variante, chacun des premier et second leviers peut comprendre un amortisseur de trainée sensiblement rectiligne, et le troisième levier peut être une bielle. Selon encore une autre variante, un seul levier comprend un amortisseur de trainée, les deux autres leviers étant chacun une bielle.

Lorsque le rotor est du type sur lequel chaque organe de liaison d'une pale au moyeu est un organe agencé en double chape, présentant une chape radiale externe retenant la pale correspondante par son pied de pale, et une chape radiale interne reliée au moyeu par des moyens de retenue et d'articulation permettant des débattements angulaires dudit organe de liaison par rapport au moyeu au moins autour d'un axe de trainée de la pale correspondante, ledit organe de liaison portant également, en saillie latérale, un levier de commande de pas de la pale correspondante, le dispositif est avantageusement tel que deux chapes latérales sont en saillie sur l'organe de liaison, chacune sur l'un respectivement de ses deux côtés et retenant l'une respectivement des rotules d'articulation d'un premier et d'un second leviers, l'une au moins desdites chapes latérales étant radialement à l'extérieur dudit levier de pas par rapport à l'axe de rotation du rotor, ce qui permet d'éviter les interférences entre ce levier de pas et le dispositif d'amortissement de trainée.

D'autres caractéristiques et avantages de l'invention découleront de la description donnée ci-dessous, à titre non limitatif, d'exemples de réalisation décrits en référence aux dessins annexés sur lesquels :

- la figure 1 est une vue schématique partielle en plan d'un rotor quadripale avec dispositif d'amortissement de trainée,
- la figure 2 est une vue analogue à la figure 1 d'un exemple de tête de rotor tripale, représenté sans les pales mais avec les organes de liaison des pales au moyeu,
- la figure 3 est une vue en coupe partielle de la tête de rotor de la figure 2, selon un plan perpendiculaire au plan de cette figure 2, et passant par l'axe longitudinal d'un organe de liaison pale-moyeu,
- la figure 3a est une vue schématique en perspective d'un organe de liaison et des moyens d'articulation correspondant, pour une pale, sur la tête de rotor des figures 1 et 2,
- la figure 3b est une vue schématique en coupe transversale d'une entretoise avec levier de pas de l'organe de liaison de la figure 3a,
- la figure 4 est une vue en partie en élévation latérale et en partie en coupe selon IV-IV de la figure 2,
- la figure 5 est une vue analogue à la figure 2 d'une tête de rotor quadripale, et
- les figures 6a, 6b, 6c, 6d et 6e sont des schémas de différentes implantations possibles du dispositif d'amortissement de trainée sur un rotor quadripale, ces implantations étant également adaptables à tout rotor avec un nombre de pales supérieur ou égal à trois.

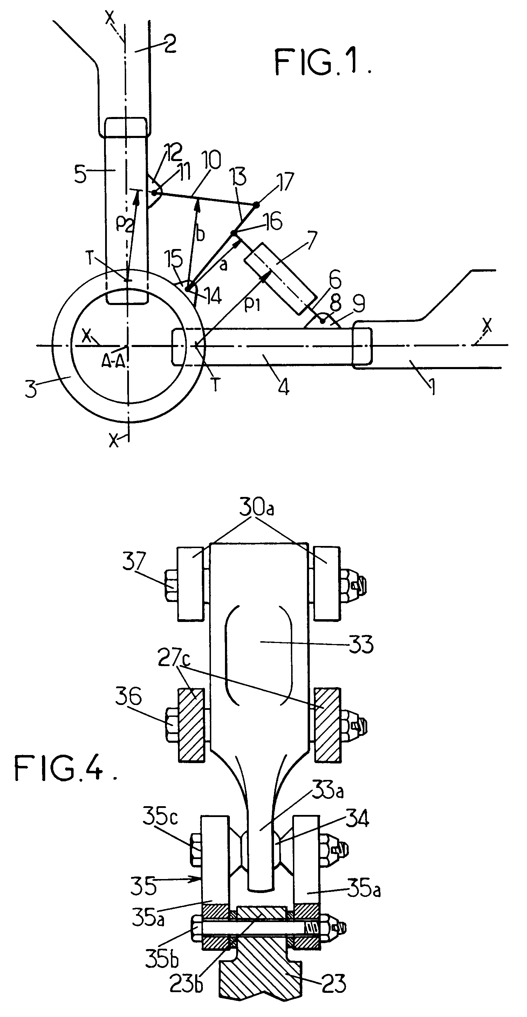

Les deux pales voisines 1 et 2 du rotor quadripale de la figure 1, dont les deux autres pales ne sont pas représentées, sont chacune reliée au moyeu 3 du rotor par un organe de liaison 4 ou 5.

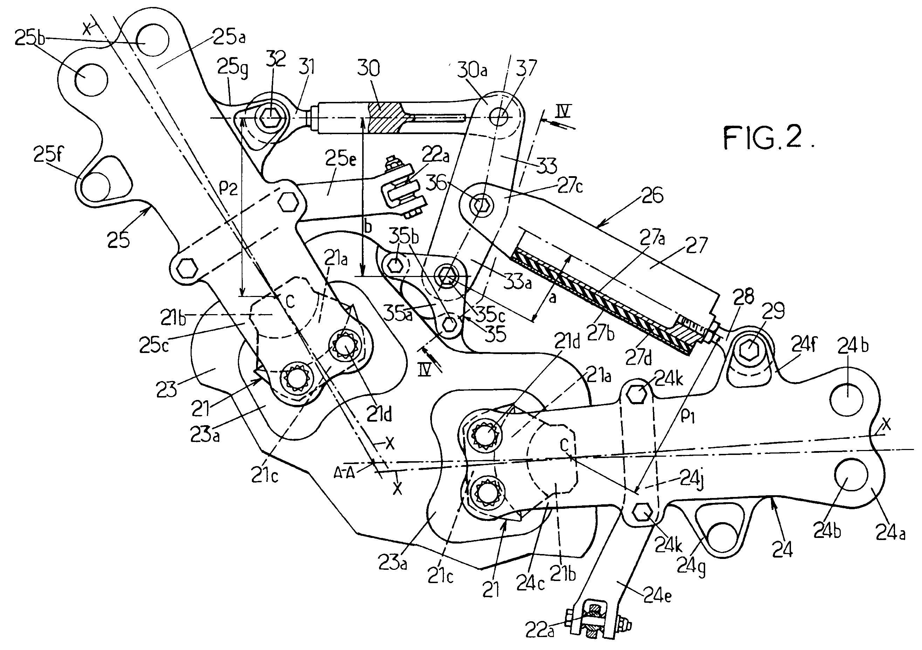

Le moyeu 3, représenté sur la figure 1 comme un plateau annulaire, peut être un plateau alvéolé comme représenté sur les figures 2, 3 et 5 et décrit ci-dessous en référence à ces figures, afin de loger dans son ouverture centrale ou dans l'alvéole correspondant à chaque pale, des moyens de retenue et d'articulation reliant un organe de liaison tel que 4 ou 5 au moyeu 3, de manière à autoriser les débattements angulaires d'une pale telle que 1 ou 2 en pas, autour de son axe longitudinal X-X de changement de pas, en trainée, autour de son axe de trainée T, [qui est perpendiculaire à l'axe X-X et parallèle à l'axe A-A de rotation du rotor, autour duquel le moyeu 3 est entraîné en rotation par un arbre rotor dont il est solidaire], et enfin en battement, autour d'un axe de battement (non représenté) perpendiculaire à la fois à l'axe de pas X-X et à l'axe de trainée T.

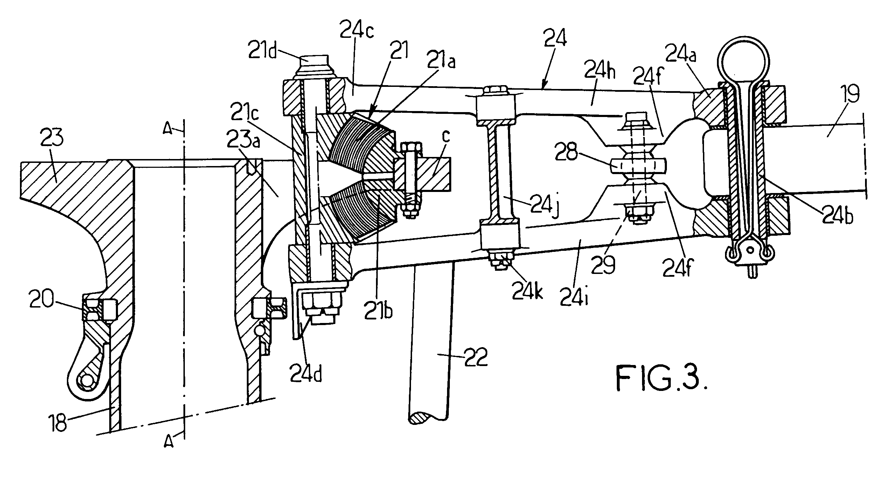

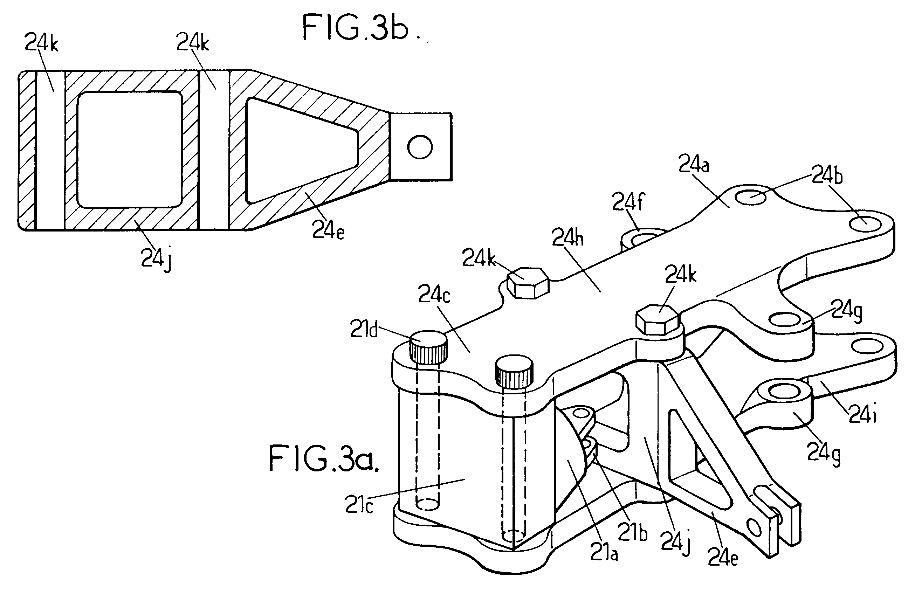

Ces moyens de retenue et d'articulation, non représentés sur la figure 1, peuvent être, pour chaque pale, une butée lamifiée sphérique telle que représentée sur les figures 2 et 3 et décrite ci-dessous en référence à ces figures, et pour laquelle les trois axes de pas X-X, de trainée T et de battement sont concourants en un point situé dans la partie périphérique du moyeu 3 et correspondant au centre géométrique de la butée lamifiée sphérique.

Chaque organe de liaison 4 ou 5 peut être un pied fourchu de la pale 1 ou 2 correspondante, ce pied fourchu s'étendant de part et d'autre du plateau de moyeu 3, auquel il est relié par les moyens de retenue et d'articulation précités. Mais il est également possible que chaque organe de liaison 4 ou 5 soit, comme représenté sur les figures 2, 3 et 5, un organe sensiblement radial couramment appelé manchon, dont l'extrémité radiale externe est agencée en chape externe de retenue du pied de la pale 1 ou 2 correspondante, et dont l'extrémité radiale interne est agencée en chape interne chevauchant le plateau de moyeu, auquel cette chape interne est reliée par lesdits moyens de retenue et d'articulation.

Le dispositif d'amortissement de trainée des pales comprend, entre les deux pales telles que 1 et 2 de chaque paire de pales voisines du rotor, un agencement à trois leviers, trois rotules d'articulation et deux liaisons pivotantes, dans lequel au moins un levier comprend au moins un ou est constitué d'au moins un amortisseur de trainée incorporant des moyens de rappel élastique ayant une raideur et un amortissement déterminés, cet agencement étant à présent décrit.

Il comprend un premier levier 6, dont la partie centrale est agencée en amortisseur de trainée 7 avec moyens de rappel élastique incorporés et à raideur définie, ou adaptateur de fréquence, et ce levier 6 est articulé par une première rotule 8 sur un support 9 en saillie latérale sur le côté de l'organe de liaison 4 qui est tourné vers la seconde pale 2. L'agencement comprend également un second levier 10 qui, dans cet exemple, est une bielle de longueur constante, articulée par une seconde rotule 11 sur un support 12 en saillie sur le côté de l'organe de liaison 5 qui est tourné vers la première pale 1. L'agencement comprend encore un troisième levier 13, également constitué par une bielle de longueur constante, et qui s'étend sensiblement radialement entre les organes de liaison 4 et 5 et est articulé par son extrémité radiale interne à l'aide d'une troisième rotule 14 sur un support 15 en saillie radiale vers l'extérieur sur le moyeu 3, entre les organes de liaison 4 et 5 et leurs moyens respectifs de retenue et d'articulation sur le moyeu 3. De plus, à son extrémité opposée à la rotule 8, le levier 6 est articulé sur le levier 13 par une première liaison pivotante 16, et, de manière analogue, l'extrémité du levier 10 qui est opposée à la rotule 11 est articulée sur ce levier 13 par une seconde liaison pivotante 17 qui, dans cet exemple, est radialement à l'extérieur de la liaison pivotante 16, elle-même radialement à l'extérieur de la rotule 14 par rapport à l'axe A-A du rotor.

Les centres des trois rotules 8, 11 et 14 définissent un unique plan, et les liaisons pivotantes 16 et 17 ont des axes de pivot parallèles entre eux, ainsi sensiblement qu'à l'axe du rotor A-A, ces axes de pivot étant perpendiculaires au plan défini par les centres des rotules. De la sorte, lorsque les pales 1 et 2 pivotent en trainée, battement et pas, l'une par rapport à l'autre et/ou par rapport au moyeu 3, les leviers 6, 10 et 13 restent coplanaires dans ce plan des centres des rotules et le dispositif est isostatique, l'amortisseur de trainée 7 étant sollicité en traction ou compression selon les amplitudes et sens de débattement angulaire des pales 1 et 2 en traînée.

Si K est la raideur de l'amortisseur rectiligne 7, coaxial au levier 6 rectiligne, si $\rho1$ et $\rho2$ sont les bras de levier respectivement de l'amortisseur 7 et du levier 6 par rapport à l'axe de trainée T de la pale 1 et de l'organe de liaison 4 correspondant, et du levier rectiligne 10 par rapport à l'axe de trainée T de la pale 2 et de l'organe de liaison 5 correspondant, c'est-à-dire si $\rho1$ est la distance entre l'axe du levier 6, passant par les centres des articulations 8 et 16, et l'axe de trainée T de l'organe 4 sur lequel le levier 6 est articulé, et si $\rho2$ et la distance entre l'axe du levier 10, passant par ses articulations 11 et 17, et l'axe de trainée T de l'organe 5 sur lequel ce levier 10 s'articule, et enfin si on désigne par a et b les bras de levier ou distances entre les axes respectivement du levier 6 et du levier 10, d'une part, et, d'autre part, le centre de l'articulation à rotule 14 du levier 13 sur le moyeu 3, les calculs montrent que la raideur équivalente K0 participant au problème de résonance de chaine cinématique (c'est-à-dire la raideur angulaire équivalente s'opposant à une rotation en trainée d'une pale par rapport au moyeu, toutes les pales ayant un mouvement de trainée en phase) est donnée par la formule (1) :

$$K0 = K \left(\rho1 - \frac{a}{b} \cdot \rho2\right)^2 \qquad (1)$$

La raideur équivalente K1 participant au problème de résonance sol (c'est-à-dire la raideur angulaire équivalente s'opposant à la rotation d'une pale en trainée par rapport aux autres pales) est donnée par la formule (2) suivante :

$$K1 = K \left[\rho1^2 + \left(\frac{a}{b} \cdot \rho2\right)^2\right] \qquad (2)$$

pour un rotor quadripale, et par la formule (2') :

$$K1 = K \left[\rho1^2 + \left(\frac{a}{b} \cdot \rho2\right)^2 + \rho1 \cdot \rho2 \cdot \frac{a}{b}\right] \qquad (2')$$

pour un rotor tripale.

Par un choix approprié de la raideur K et des distances $\rho1$, $\rho2$, a, b, donc par un choix approprié de la raideur K de l'amortisseur 7 et des positions des articulations à rotule 8, 11 et 14 et pivotantes 16 et 17, on peut ajuster simplement et indépendamment l'une de l'autre les raideurs équivalentes K0 et K1 pour se découpler aussi bien de la résonance sol que de la résonance de chaine cinématique, et sans que la raideur K doive être importante, ce qui permet de limiter les efforts statiques dans l'amortisseur 7.

On note que si les leviers 6 et 10 s'articulent sur le levier 13 en un même point de ce dernier, c'est-à-dire si les liaisons pivotantes 16 et 17 sont coaxiales, leurs axes géométriques de pivot étant confondus, et si les rotules 8 et 11 sont à la même distance radiale de l'axe A-A du rotor, on obtient que a = b et $\rho1 = \rho2$. On retrouve ainsi une configuration d'amortisseur de trainée ou d'adaptateur de fréquence interpale, pour laquelle la raideur équivalente K0 est nulle et la raideur équivalente K1 est soit égale à 2 K $\rho^2$ pour un rotor quadripale, 3 K $\rho^2$ pour un rotor tripale, soit, si b est le nombre de pales, et selon N.M. SELA et A. ROSEN ("The influence of alternate inter-blade connections on ground resonance" dans "Journal of the American Helicopter Society" de Juillet 1994), la raideur K1 équivalente est donnée par la formule (3) suivante :

$$K1 = 2 \left(1 - \cos \frac{2\Pi}{b}\right) K\rho^2 \qquad (3)$$

On note également que si l'articulation du levier 6 sur le levier 13 est déplacée jusqu'à la rotule 14, on obtient que a = 0, et on retrouve une configuration classique d'amortisseur de trainée ou d'adaptateur de fréquence articulé entre l'organe 4 de liaison de la pale 1 au moyeu et ce moyeu 3. Dans cette configuration, K0 = K1 = K . $\rho 1^2$.

L'agencement permet un réglage indépendant des deux raideurs K0 et K1 entre les deux configurations d'amortisseurs interpales et d'amortisseurs classiques analysées ci-dessus.

Les formules (1), (2) et (2'), (3) restent les mêmes en ce qui concerne le calcul des amortissements. Il suffit simplement de remplacer K, K0 et K1 respectivement par K', K'0 et K'1 pour en déduire les amortissements équivalents correspondants.

Dans l'agencement décrit, l'amortisseur 7, qui introduit un amortissement pour la stabilité et une raideur pour changer la fréquence propre des pales en trainée, peut avoir n'importe quelle structure appropriée, et être par exemple un amortisseur hydraulique, hydropneumatique, à couche d'élastomère ou de matériau viscoélastique sollicitée en cisaillement entre des armatures, ou avec une combinaison de ces différents moyens.

Dans ce dispositif, on note également qu'en mode de chaine cinématique, les pales pivotent en phase chacune autour de son axe de trainée T, de sorte que tous les amortisseurs 7 du dispositif s'allongent ou se raccourcissent, car l'amplitude de déplacement d'une extrémité de chaque amortisseur tel que 7 est supérieure à celle de l'autre extrémité, de sorte que chaque amortisseur est efficace.

Les figures 2 et 3 représentent une tête de rotor principal tripale, dont chaque paie (non représentée) est reliée au moyeu 23 par un organe dénommé ci-après manchon de liaison 24 ou 25, sensiblement radial, agencé en double chape avec une chape radialement externe 24a ou 25a, entre les deux branches de laquelle le pied de la pale correspondante (comme représenté schématiquement en 19 sur la figure 3) est retenu à l'aide de deux broches parallèles (schématisées en 24b ou 25b) et symétriques de part et d'autre de l'axe longitudinal X-X du manchon 24 ou 25. Ce dernier présente également une chape radialement interne 24c ou 25c, dont les deux branches chevauchent le moyeu 23. Ce moyeu 23 est un plateau horizontal (perpendiculaire à l'axe A-A du rotor) présentant, pour chaque pale, un bras radial traversé axialement d'un alvéole 23a, le moyeu 23 étant d'une seule pièce (voir figure 3) avec l'extrémité supérieure d'un mât rotor 18 entraîné en rotation autour de l'axe A-A, et autour duquel est montée, pour chaque pale et sous le plateau de moyeu 23, une butée basse de battement 20 réalisée sous la forme connue d'un anneau réciproque. Chaque manchon 24 ou 25 est relié au moyeu 23 par sa chape radiale interne 24c ou 25c, qui est retenue sur le bord externe de l'alvéole 23a correspondant du moyeu 23 par des moyens de retenue et d'articulation constitués d'une butée lamifiée sphérique 21 de structure connue. Cette butée 21 comprend une partie centrale 21a constituée d'un empilement alterné de coupelles rigides et de couches élastiquement déformables en forme de calottes sphériques, entre une armature radiale externe 21b boulonnée sur le bord externe de l'alvéole 23a du moyeu 23, et une armature radiale interne 21c, traversant l'alvéole 23a et fixée en entretoise entre les branches de la chape interne 24c ou 25c par des goujons filetés 21d. Ces derniers assurent simultanément la fixation sous la branche inférieure de la chape 24c ou 25c, d'un talon tel que 24d, coopérant avec la butée basse 20 en regard pour limiter les battements vers le bas de la pale et du manchon 24 ou 25 correspondant. Chaque butée lamifiée sphérique 21, logée dans l'alvéole 23a correspondant, permet notamment les débattements angulaires du manchon 24 ou 25 par rapport au moyeu 23 autour de trois axes perpendiculaires deux à deux et concourant au centre C géométrique de la rotule 21, situé dans le bord radial du moyeu 23. Ces trois axes sont l'axe longitudinal de changement de pas X-X, l'axe de trainée T, sensiblement parallèle à l'axe du rotor A-A et l'axe de battement (non représenté, perpendiculaire aux deux premiers). Pour commander le pas d'une pale et du manchon 24 ou 25 qui la porte, ce dernier porte également, en saillie latérale, un levier 24e ou 25e de commande de pas, boulonné sur le manchon 24 ou 25 et dont l'extrémité libre est agencée en chape retenant une rotule 22a d'articulation de l'extrémité supérieure d'une bielle correspondante 22 de commande de pas.

Chaque manchon 24 ou 25 présente également, en saillie latérale sur chacun de ses côtés, et radialement à l'extérieur du levier de pas 24e ou 25e, une première et une seconde chapes latérales 24f et 24g ou 25f et 25g, la seconde chape 24g ou 25g étant latéralement du même côté que le levier de pas 24e ou 25e et radialement plus proche de ce dernier que la première chape latérale 24f ou 25f en saillie sur le côté opposé du manchon 24 ou 25.

Chaque manchon 24 ou 25 peut effectivement avoir une structure tubulaire dans sa partie centrale, entre ses deux chapes d'extrémité 24a ou 25a et 24c ou 25c. Mais, comme représenté clairement sur les figures 3 et 3a pour le manchon 24, il peut également être constitué de deux plaques rigides superposées 24h et 24i, formant les branches opposées des chapes 24a et 24c, et maintenues écartées l'une de l'autre par l'armature interne 21c de la butée 21 ainsi que par une entretoise centrale 24j, portant le levier de pas 24e en saillie latérale (voir figure 3b), et sur laquelle les deux plaques 24h et 24i sont fixées par des goujons filetés 24k. Les plaques supérieure 24h et inférieure 24i présentent chacune en saillie respectivement d'un côté et de l'autre l'une respectivement des deux branches de chacune des chapes latérales 24f et 24g, comme représenté pour la chape 24f sur la figure 3 et pour les chapes 24f et 24g sur la figure 3a.

Comme dans l'exemple précédent, entre les deux manchons 24 et 25 de chaque paire de manchons voisins de la tête de rotor, le dispositif d'amortissement de trainée comprend trois leviers 26, 30 et 33, dont le premier est un amortisseur de trainée 27 (en partie en coupe sur la figure 2), et dont le second et troisième leviers 30 et 33 sont des bielles de longueur fixe.

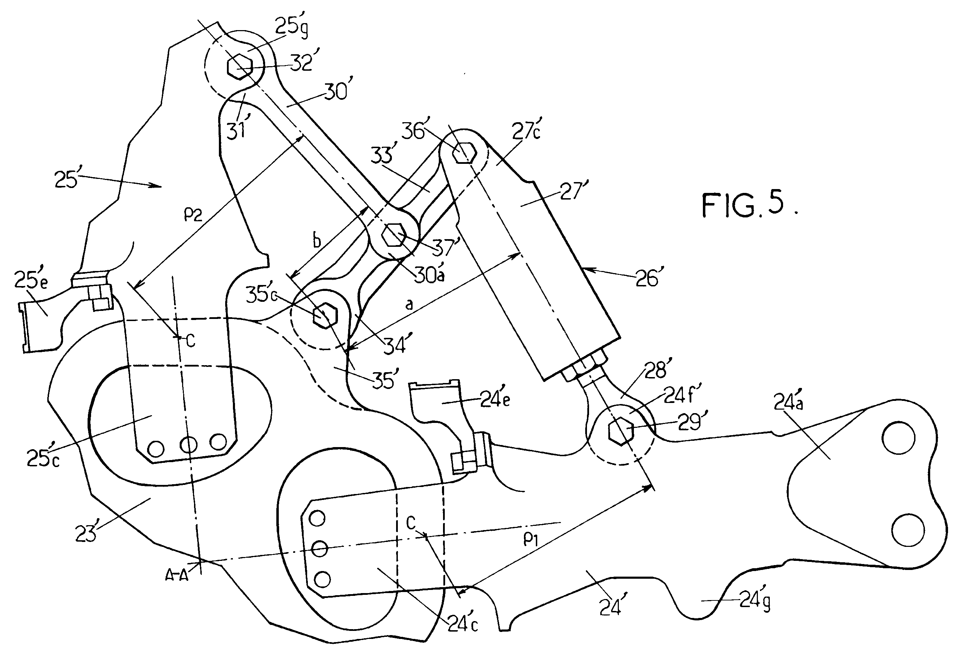

L'amortisseur 27 comprend une armature interne cylindrique 27a prolongée à une extrémité par un embout à rotule 28 retenue par un axe 29 dans la chape latérale 24f du manchon 24, et l'amortisseur 27 comprend également une armature tubulaire externe 27b prolongée, à son extrémité opposée à la rotule 28, par une chape 27c dont les deux branches chevauchent la partie centrale du troisième levier 33 et sont montées pivotantes sur ce dernier par un axe de pivot 36, parallèle à l'axe A-A, et constitué par la vis d'un ensemble vis-écrou de liaison de l'amortisseur 27 au levier 33. Entre ses armatures 27a et 27b, l'amortisseur 27 comprend également une couche tubulaire cylindrique d'élastomère 27d travaillant en cisaillement pour assurer un amortissement avec rappel élastique et une raideur donnée. Le second levier 30 est également équipé, à une extrémité, d'un embout à rotule 31 retenue dans la seconde chape latérale 25g du manchon 25 par un axe 32, l'extrémité opposée du levier 30 étant également aménagée en chape 30a dont les deux branches chevauchent l'extrémité radiale externe du levier 33 et sont montées pivotantes sur ce dernier par un axe de pivot 37 parallèle au pivot 36 et également constitué par la vis d'un ensemble vis-écrou de liaison du levier 30 au levier 33. La partie relativement épaisse du levier 33 sur laquelle sont montés pivotant les leviers 26 et 30 (voir figure 4) se prolonge radialement vers l'intérieur par un embout aminci 33a portant une rotule 34 retenue dans une chape 35 en saillie latérale vers l'extérieur du moyeu 23 et rapportée latéralement sur la périphérie de ce dernier. La chape 35 est constituée de deux plaquettes parallèles 35a, de forme sensiblement triangulaire à sommets arrondis, fixées par des ensembles vis-écrou 35b au niveau de deux de leurs sommets, de part et d'autre d'appendices amincis 23b en saillie latéralement sur le moyeu 23, dans l'évidement présenté par ce moyeu entre ses deux bras radiaux auxquels sont liés les manchons 24 et 25. La rotule 34 est retenue entre les troisième sommets des plaques 35a par un ensemble vis-écrou 35c. Les boulons et vis constituant les axes de pivot et de retenue 29, 32, 36, 37, 35b, 35c sont parallèles entre eux et à l'axe du rotor A-A, et sensiblement perpendiculaires au plan commun défini par les centres des trois rotules 28, 31 et 34. Comme sur la figure 1, le pivot 36 du levier 26 sur le levier 33 est plus proche de l'axe A-A que le pivot 37 du levier 30 sur ce même levier 33. Mais dans l'exemple de la figure 2, ce dernier a une forme équivalente à un levier légèrement coudé, puisque les pivots 36 et 37 et la rotule 34 ne sont pas centrés sur une même direction radiale. Cette disposition permet de raccourcir le levier 30, donc de l'alléger, tout en enveloppant le levier de pas 25e sans risque d'interférence avec lui lors des débattements du manchon 25 sur sa plage de pas.

La tête de rotor quadripale de la figure 5 est analogue à l'exemple des figures 2 et 3 en ce qui concerne la liaison de chaque pale au moyeu par un manchon en double chape, la liaison de ce manchon sur le moyeu par une rotule lamifiée sphérique, la structure du moyeu en plateau alvéolé, et le montage, entre deux manchons voisins, d'un agencement à trois leviers, trois rotules et deux liaisons pivotantes, et un amortisseur de trainée intégré à l'un des leviers, de sorte qu'on se limite à présenter les principales différences entre ces deux exemples, en affectant aux éléments de la figure 5 les mêmes références que les éléments analogues des figures 2 et 3 mais affectés d'un symbole prime.

Une première différence est que le premier levier 26' à amortisseur de trainée incorporé 27' est pivoté par sa chape d'extrémité 27'c et le pivot 36' sur l'extrémité radiale externe du troisième levier 33', qui est une bielle rectiligne, tandis que le second levier 30' est pivoté par sa chape d'extrémité 30'a et le pivot 37' sur la partie centrale du troisième levier 33', dont l'extrémité radiale interne est articulée par un embout à rotule 34' retenue par l'axe 35'c dans la chape 35' en saillie sensiblement radiale vers l'extérieur du moyeu 23' et d'une seule pièce avec ce dernier. Une autre différence est que la chape latérale 24'g ou 25'g du manchon 24' ou 25' pour l'articulation d'un second levier tel que 30' est radialement à l'extérieur de l'autre chape latérale 24'f ou 25'f, pour l'articulation d'un premier levier tel que 26'. Il résulte de ces différences que les bras de levier a et b respectivement des premier et second leviers 26' et 30' par rapport au centre de la troisième rotule 34' sont respectivement supérieur et inférieur aux bras de levier a et b de l'exemple de la figure 2, sans que les bras de leviers ρ1 et ρ2 ne soient très différents. Du fait de cette disposition des trois leviers 26', 30' et 33', les leviers de pas 24'e et 25'e sont en saillie sur l'autre côté du manchon 24' ou 25', par rapport à la position de la figure 2. Chaque levier de pas 24'e ou 25'e est ainsi logé dans l'espace délimité entre les premier et troisième leviers 26' et 33', le moyeu 23' et le manchon correspondant tel que 24'.

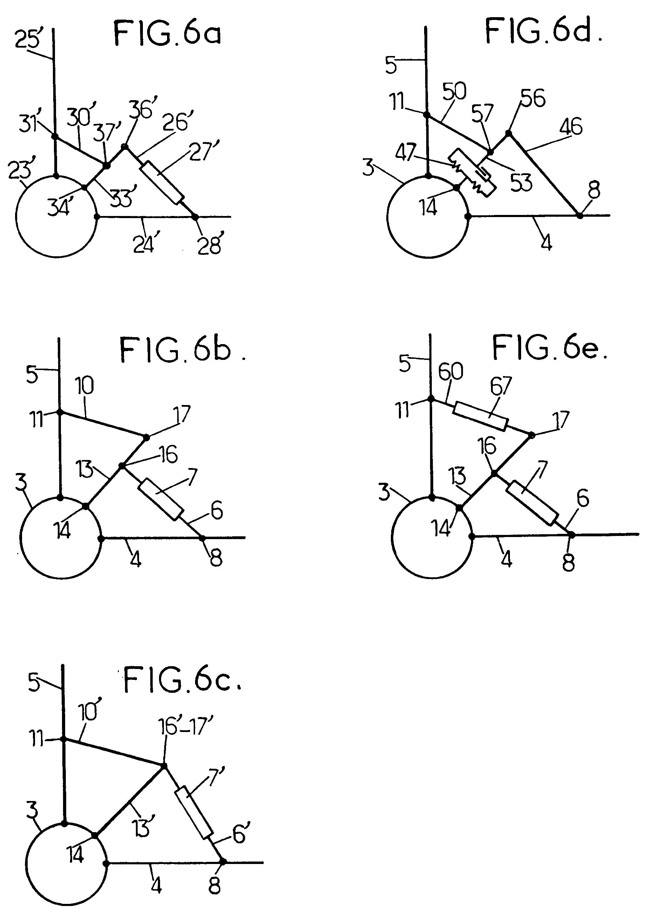

Les figures 6a à 6e représentent schématiquement cinq configurations possibles. On note que la configuration de la figure 6a correspond à celle de la figure 5 (un seul amortisseur de trainée 27' sur le premier levier 26' dont la liaison pivotante 36' sur le troisième levier 33' est radialement à l'extérieur de la liaison pivotante 37' du second levier 30' sur ce même levier 33', les leviers 30' et 33' étant des bielles de longueur fixe), et que la configuration de la figure 6b correspond à celle de la figure 1 et est analogue à celle de la figure 2. Pour cette raison, les éléments de la figure 6b sont repérés par les mêmes références que les éléments correspondants de la figure 1.

La configuration de la figure 6c correspond à une variante de la figure 6b, dans laquelle le premier levier 6' avec l'amortisseur de trainée 7' est monté pivotant sur le troisième levier 13' par une liaison pivotante 16' coaxiale avec la liaison pivotante 17' reliant le second levier 10' au troisième 13'. Pour le reste, les articulations des leviers 6', 10' et 13' par les rotules respectivement 8, 11 et 14 sur les premier et second manchons 4 et 5 ainsi que sur le moyeu 3 ne sont pas modifiées.

La configuration de la figure 6d est une autre variante dans laquelle les premier et second leviers 46 et 50 sont chacun une bielle de longueur fixe et reliés par des liaisons pivotantes 56 et 57, décalées radialement comme dans l'exemple de la figure 6a, sur le troisième levier 53 qui est équipé d'un amortisseur de trainée 47. Pour le reste, dans ce cas également, les trois leviers 46, 50 et 53 sont articulés par les rotules 8, 11 et 14 respectivement sur les manchons 4 et 5 et le moyeu 3.

Enfin, la configuration de la figure 6e est une variante de l'exemple de la figure 6b, dans laquelle la seule différence est le remplacement de la bielle de longueur fixe constituant le second levier 10 par un second levier 60 comprenant un second amortisseur de trainée 67, rectiligne et de structure analogue à celle de l'amortisseur 7 du premier levier 6.

D'autres configurations sont possibles, par exemple à deux amortisseurs, l'un étant sur l'un des premier et second leviers, et l'autre sur le troisième levier, ou encore à trois amortisseurs, un amortisseur étant monté sur chacun des trois leviers.

Il est également possible de monter le dispositif d'amortissement de trainée de l'invention sur un rotor dont le moyeu ne comporte pas un unique plateau alvéolé, mais deux plateaux espacés l'un au-dessus de l'autre, et entre lesquels les moyens d'articulation sont retenus par des tirants fixés aux plateaux et à une armature radiale externe des moyens d'articulation, ces tirants traversant des évidements ménagés dans les branches de la chape interne du manchon, dans le manchon lui-même ou dans les plaques superposées qui le constituent le cas échéant.

De même, l'organe de liaison de chaque pale au moyeu peut ne pas être un organe distinct de la pale, mais le pied fourchu de cette pale, lequel pied fourchu peut chevaucher un moyeu à plateau alvéolé, auquel il est relié par des moyens d'articulation logés dans un alvéole et retenus, d'une part, sur le bord externe de cet alvéole et, d'autre part, sur les branches du pied fourchu par des armatures respectivement radiale externe et radiale interne de ces moyens d'articulation, tels qu'une butée lamifiée sphérique.

Malgré un ajout de pièces au niveau de la tête de rotor, par rapport aux réalisations de l'état de la technique, le dispositif de l'invention permet de résoudre les deux types de problèmes que posent la résonance sol et la résonance de chaine cinématique. De plus, il donne une grande liberté de réglage, notamment des deux raideurs équivalentes K0 et K1 mentionnées ci-dessus, lors des essais en vol, tout en conservant, éventuellement, le même amortisseur. Ce réglage permet de plus de dégager des marges de sécurité vis-à-vis des problèmes de résonance sol que tout hélicoptère peut rencontrer lors de ses différentes augmentations de masse maximale.

## Revendications

1. Rotor de giravion, en particulier un rotor principal ou un rotor arrière conventionnel d'hélicoptère, à au moins trois pales (1,2) reliées chacune par un organe de liaison (4,5,24,25;24',25') respectif à un moyeu (3,23,23') de rotor, entraîné en rotation autour d'un axe (A-A) de rotation du rotor, qui comprend un dispositif d'amortissement de trainée des pales,
caractérisé en ce que ledit dispositif d'amortissement de trainée comprend, entre les deux pales (1,2) de chaque paire de pales voisines du rotor,

   - un premier levier (6,6',26,26',46), articulé par une première rotule (8,28,28') sur ledit organe de liaison (4,24,24') d'une première (1) des deux pales (1,2),
   - un second levier (10,10',30,30',50,60), articulé par une seconde rotule (11,31,31') sur ledit organe de liaison (5,25,25') de la seconde (2) des deux pales, et
   - un troisième levier (13,13',33,33',53), articulé par une troisième rotule (14,34,34') sur le moyeu (3,23,23'), entre lesdits organes de liaison (4,5,24,25; 24',25') des deux pales (1,2), et s'étendant entre lesdits organes de liaison et latéralement vers l'extérieur du moyeu (3,23,23'),
   les premier et second leviers (6,6',26,26',46;10,10', 30,30',50,60) étant articulés sur le troisième levier (13,13',33,33',53) par une première et une seconde liaisons pivotantes (16,17,16',17';36,37;36',37',56,57) respectivement, autour d'axes de pivot parallèles l'un à l'autre et sensiblement perpendiculaires au plan défini par les centres des trois rotules (8,11,14;28,31,34;28', 31',34'), et l'un au moins (6,6',26,26'53,60) des trois leviers comprenant au moins un amortisseur de trainée (7,7',27,27',47,67) desdites deux pales (1,2).

2. Rotor selon la revendication 1, caractérisé en ce que la première et la seconde rotules (8,28,28',11,31,31') sont retenues sur le côté, tourné vers ledit troisième levier (13,33,33'), de l'organe de liaison respectif (4,24,24',5,25,25'), ledit troisième levier (13,33,33') s'étendant sensiblement radialement par rapport à l'axe (A-A) de rotation du rotor, auquel les deux axes de pivot (16,17;36,37;36',37') sont sensiblement parallèles.

3. Rotor selon l'une des revendications 1 et 2, caractérisé en ce que chaque amortisseur (7,7';27,27';47,67) comprend des moyens de rappel élastique à raideur déterminée.

4. Rotor selon l'une quelconque des revendications 1 à 3, caractérisé en ce que les deux axes de pivot (16',17') sont confondus.

5. Rotor selon l'une quelconque des revendications 1 à 3, caractérisé en ce que les deux axes de pivot (16,17; 36,37;36',37';56,57) sont décalés radialement l'un par rapport à l'autre et par rapport à l'axe (A-A) de rotation du rotor.

6. Rotor selon l'une quelconque des revendications 1 à 5, caractérisé en ce que le troisième levier (53) comprend un amortisseur de trainée (47).

7. Rotor selon l'une quelconque des revendications 1 à 6, caractérisé en ce que l'un au moins des premier et second leviers (6,10;6',10';6,60;26,30;26',30') comprend un amortisseur de trainée (7,7',27,27',67) sensiblement rectiligne.

8. Rotor selon la revendication 7, caractérisé en ce que chacun des premier et second leviers (6,60) comprend un amortisseur de trainée (7,67) sensiblement rectiligne, et le troisième (13) levier est une bielle.

9. Rotor selon l'une quelconque des revendications 1 à 7, caractérisé en ce qu'un seul levier (6,6',26,26',53) comprend un amortisseur de trainée (7,7',27,27',47), et les deux autres leviers (10,13;10',13';30,33;30',33';46,50) sont chacune une bielle.

10. Rotor selon l'une quelconque des revendications 1 à 9, caractérisé en ce que la troisième rotule (34) est retenue dans une chape latérale (35) rapportée sur le moyeu (23).

11. Rotor selon l'une quelconque des revendications 1 à 10, caractérisé en ce que les première et seconde liaisons pivotantes (36,37;36',37') comprennent chacune une chape (27c,30a;27'c,30'a) à une extrémité respectivement du premier et du second leviers (26,30;26',30') et par laquelle chacun d'eux est monté pivotant sur le troisième levier (33,33').

12. Rotor selon l'une quelconque des revendications 1 à 11, sur lequel chaque organe de liaison (24,24') d'une pale au moyeu (23,23') est un organe agencé en double chape, présentant une chape radiale externe (24a,24'a) retenant la pale correspondante par son pied de pale, et une chape radiale interne (24c,24'c) reliée au moyeu (23,23') par des moyens de retenue et d'articulation (21) permettant des débattements angulaires dudit organe de liaison (24,24') par rapport au moyeu (23,23') au moins autour d'un axe de trainée (T) de la pale correspondante, ledit organe de liaison (24,24') portant également, en saillie latérale, un levier (24e,24'e) de commande de pas de la paie correspondante, caractérisé en ce que ledit organe de liaison (24, 24') présente également deux chapes latérales (24f,24g ; 24'f,24'g) en saillie chacune sur l'un respectivement de ses deux côtés et retenant l'une respectivement des rotules (28,31 ; 28',31') d'articulation d'un premier (26,26') et d'un second leviers (30,30'), l'une au moins desdites chapes latérales étant radialement à l'extérieur dudit levier de pas (24e,24'e) par rapport à l'axe de rotation du rotor (A-A).

## Claims

1. Rotor of a rotorcraft, in particular a helicopter main rotor or conventional tail rotor, having at least three blades (1,2) each connected by a respective linking member (4,5,24,25;24',25') to a rotor hub (3,23,23') driven in rotation about an axis (A-A) of rotation of the rotor, which includes a device for damping the drag of the blades, characterized in that said drag damping device comprises, between the two blades (1,2) of each pair of neighbouring blades of the rotor:

   - a first lever (6,6',26,26',46) articulated by a first ball joint (8,28,28') to said linking member (4,24,24') of a first (1) of the two blades (1,2),
   - a second lever (10,10',30,30',50,60) articulated by a second ball joint (11,31,31') to said linking member (5,25,25') of the second (2) of the two blades, and
   - a third lever (13,13',33,33',53) articulated by a third ball joint (14,34,34') to the hub (3,23,23') between said linking members (4,5,24,25;24',25') of the two blades (1,2) and extending between said linking members and laterally towards the outside of the hub (3,23,23'), the first and second levers (6,6',26,26',46;10,10',30,30',50,60) being articulated to the third lever (13,13',33,33',53) by a first pivoting link and a second pivoting link (16,17,16',17';36,37;36',37';56,57), respectively, about axes of pivoting parallel to one another and substantially perpendicular to the plane defined by the centres of the three ball joints (8,11,14;28,31,34;28',31',34'), and at least one (6,6',26,26',53,60) of the three levers comprising at least one drag damper (7,7',27,27',47,67) for said two blades (1,2).

2. Rotor according to Claim 1, characterized in that the first and second ball joints (8,28,28',11,31,31') are held on the side, turned towards said third lever (13,33,33'), of the respective linking member (4,24,24',5,25,25'), said third lever (13,33,33') extending substantially radially with respect to the axis (A-A) of rotation of the rotor, to which the two axes of pivoting (16,17;36,37;36',37') are substantially parallel.

3. Rotor according to either of Claims 1 and 2, characterized in that each damper (7,7';27,27';47,67) comprises elastic return means of a given stiffness.

4. Rotor according to any one of Claims 1 to 3, characterized in that the two axes of pivoting (16',17') are coincident.

5. Rotor according to any one of Claims 1 to 3, characterized in that the two axes of pivoting (16,17;36, 37;36',37',56,57) are radially offset with respect to each other and with respect to the axis (A-A) of rotation of the rotor.

6. Rotor according to any one of Claims 1 to 5, characterized in that the third lever (53) comprises a drag damper (47).

7. Rotor according to any one of Claims 1 to 6, characterized in that at least one of the first and second levers (6,10;6',10',6,60;26,30;26',30') comprises a substantially straight drag damper (7,7',27,27').

8. Rotor according to Claim 7, characterized in that each of the first and second levers (6,60) comprises a substantially straight drag damper (7,67), and the third lever (13) is a connecting rod.

9. Rotor according to any one of Claims 1 to 7, characterized in that a single lever (6,6',26,26',53) comprises a drag damper (7,7',27,27',47), and the other two levers (10,13;10',13';30,33;30',33';46,50) are each a connecting rod.

10. Rotor according to any one of Claims 1 to 9, characterized in that the third ball joint (34) is held in a lateral clevis (35) attached to the hub (23).

11. Rotor according to any one of Claims 1 to 10, characterized in that the first and second pivoting links (36,37; 36',37') each comprise a clevis (27c,30a;27'c,30'a) at one end of the first lever and the second lever (26,30;26',30') respectively, and by means of which each of them is mounted in pivoting fashion on the third lever (33,33').

12. Rotor according to any one of Claims 1 to 11, in which each member (24,24') for linking a blade to the hub (23,23') is a member designed as a double clevis, having a radially outer clevis (24a,24'a) holding the corresponding blade by its blade root, and a radially inner clevis (24c,24'c) connected to the hub (23,23') by a retaining and articulating means (21) allowing angular deflections of said linking member (24,24') with respect to the hub (23,23') at least about an axis of drag (T) of the corresponding blade, said linking member (24,24') also bearing, as a lateral projection, a lever (24e,24'e) for controlling the pitch of the corresponding blade, characterized in that said linking member (24,24') also has two lateral clevises (24f,24g;24'f,24'g) each projecting respectively from one of its two sides and holding respectively one of the ball joints (28,31;28',31') for the articulation of a first lever (26,26') and of a second lever (30,30'), at least one of said lateral clevises being radially on the outside of said pitch lever (24e,24'e) with respect to the axis of rotation of the rotor (A-A).

**Patentansprüche**

1. Drehflüglerrotor, insbesondere herkömmlicher Hubschrauberhaupt- oder -heckrotor mit wenigstens drei Blättern (1, 2), von denen jedes über ein jeweiliges Verbindungsorgan (4, 5, 24, 25; 24', 25') mit einer Rotornabe (3, 23, 23') verbunden ist, die um eine Drehachse (A-A) des Rotors drehangetrieben wird, der eine Vorrichtung zur Dämpfung des Widerstands der Blätter enthält, **dadurch gekennzeichnet**, daß die Vorrichtung zur Widerstandsdämpfung zwischen den beiden Blättern (1, 2) jedes Paares benachbarter Blätter des Rotors

- einen ersten Hebel (6, 6', 26, 26', 46), der über einen ersten Kugelkopf (8, 28, 28') am Verbindungsorgan (4, 24, 24') eines ersten (1) der beiden Blätter (1, 2) gelenkig angebracht ist,
- einen zweiten Hebel (10, 10', 30, 30', 50, 60), der über einen zweiten Kugelkopf (11, 31, 31') am Verbindungsorgan (5, 25, 25') des zweiten (2) der beiden Blätter gelenkig angebracht ist, und

- einen dritten Hebel (13, 13', 33, 33', 53) enthält, der über einen dritten Kugelkopf (14, 34, 34') an der Nabe (3, 23, 23') zwischen den Verbindungsorganen (4, 5, 24, 25; 24', 25') der beiden Blätter (1, 2) gelenkig angebracht ist und sich zwischen den Verbindungsorganen und von der Nabe (3, 23, 23') aus seitlich nach außen hin erstreckt,
wobei der erste und zweite Hebel (6, 6', 26, 26', 46; 10, 10', 30, 30', 50, 60) am dritten Hebel (13, 13', 33, 33', 53) über eine erste bzw. zweite Schwenkverbindung (16, 17, 16', 17'; 36, 37; 36', 37', 56, 57) um Schwenkachsen gelenkig angebracht sind, die zueinander parallel und im wesentlichen senkrecht zu einer durch die Mittelpunkte der drei Kugelköpfe (8, 11, 14; 28, 31, 34; 28', 31', 34') bestimmten Ebene verlaufen, und wenigstens einer (6, 6', 26, 26', 53, 60) der drei Hebel wenigstens einen Widerstandsdämpfer (7, 7', 27, 27', 47, 67) der beiden Blätter (1, 2) enthält.

2. Rotor nach Anspruch 1, **dadurch gekennzeichnet**, daß der erste und zweite Kugelkopf (8, 28, 28', 11, 31, 31') an der zum dritten Hebel (13, 33, 33') zugewandten Seite des jeweiligen Verbindungsorgans (4, 24, 24', 5, 25, 25') gehalten sind, wobei sich der dritte Hebel (13, 33, 33') im wesentlichen radial in bezug auf die Drehachse (A-A) des Rotors erstreckt, zu der die beiden Schwenkachsen (16, 17; 36, 37; 36', 37') im wesentlichen parallel verlaufen.

3. Rotor nach einem der Ansprüche 1 und 2, **dadurch gekennzeichnet**, daß jeder Dämpfer (7, 7'; 27, 27'; 47, 67) elastische Rückstellmittel mit festgelegter Härte enthält.

4. Rotor nach einem der Ansprüche 1 bis 3, **dadurch gekennzeichnet**, daß die beiden Schwenkachsen (16', 17') vereinigt sind.

5. Rotor nach einem der Ansprüche 1 bis 3, **dadurch gekennzeichnet**, daß die beiden Schwenkachsen (16, 17; 36, 37; 36', 37'; 56, 57) in bezug zueinander und in bezug auf die Drehachse (A-A) des Rotors radial versetzt sind.

6. Rotor nach einem der Ansprüche 1 bis 5, **dadurch gekennzeichnet**, daß der dritte Hebel (53) einen Widerstandsdämpfer (47) enthält.

7. Rotor nach einem der Ansprüche 1 bis 6, **dadurch gekennzeichnet**, daß der erste und/oder der zweite Hebel (6, 10; 6', 10'; 6, 60; 26, 30; 26', 30') einen im wesentlichen geradlinigen Widerstandsdämpfer (7, 7', 27, 27', 67) enthält.

8. Rotor nach Anspruch 7, **dadurch gekennzeichnet**, daß der erste und der zweite Hebel (6, 60) jeweils einen im wesentlichen geradlinigen Widerstandsdämpfer (7, 67) enthalten und der dritte Hebel (13) eine Stange ist.

9. Rotor nach einem der Ansprüche 1 bis 7, **dadurch gekennzeichnet**, daß nur ein einziger Hebel (6, 6', 26, 26', 53) einen Widerstandsdämpfer (7, 7', 27, 27', 47) enthält und die beiden anderen Hebel (10, 13; 10', 13'; 30, 33; 30', 33'; 46, 50) jeweils eine Stange sind.

10. Rotor nach einem der Ansprüche 1 bis 9, **dadurch gekennzeichnet**, daß der dritte Kugelkopf (34) in einem seitlichen Gabelkopf (35) gehalten ist, der an der Nabe (23) angebaut ist.

11. Rotor nach einem der Ansprüche 1 bis 10, **dadurch gekennzeichnet**, daß die erste und die zweite Schwenkverbindung (36, 37; 36', 37') jeweils einen Gabelkopf (27c, 30a; 27'c, 30'a) enthalten, der an einem Ende des ersten bzw. zweiten Hebels (26, 30; 26', 30') ist und über den jeder von ihnen schwenkbar am dritten Hebel (33, 33') angebracht ist.

12. Rotor nach einem der Ansprüche 1 bis 11, bei dem jedes Verbindungsorgan (24, 24') eines Blattes an der Nabe (23, 23') ein als Doppelgabelkopf eingerichtetes Organ ist, das einen äußeren radialen Gabelkopf (24a, 24'a), der das entsprechende Blatt über dessen Blattfuß hält, und einen inneren radialen Gabelkopf (24c, 24'c) aufweist, der mit der Nabe (23, 23') über Halte- und Gelenkmittel (21) verbunden ist, die Winkelausschläge des Verbindungsorgans (24, 24') in bezug auf die Nabe (23, 23') zumindest um eine Widerstandsachse (T) des entsprechenden Blattes ermöglichen, wobei das Verbindungsorgan (24, 24') seitlich vorstehend auch einen Hebel (24e, 24'e) zur Steuerung der Anstellung des entsprechenden Blattes trägt, **dadurch gekennzeichnet**, daß das Verbindungsorgan (24, 24') auch zwei seitliche Gabelköpfe (24f, 24g; 24'f, 24'g) aufweist, die jeweils an jeweils einer seiner beiden Seiten vorstehen und jeweils einen der Gelenkkugelköpfe (28, 31; 28', 31') eines ersten (26, 26') und eines zweiten Hebels (30, 30') hält, wobei wenigstens einer dieser beiden seitlichen Gabelköpfe in bezug auf die Drehachse (A-A) des Rotors radial außerhalb des Anstellhebels (24e, 24'e) liegt.

**FIG.1.**

**FIG.4.**

FIG.2.

FIG.3.

FIG.3a.

FIG.3b.

FIG. 5.

FIG.6a

FIG.6d.

FIG.6b.

FIG.6e.

FIG.6c.